# EUROPEAN PATENT SPECIFICATION

(11) **EP 2 120 673 B1**
(45) Date of publication and mention of the grant of the patent: **18.08.2010**
(21) Application number: 08720186.9
(22) Date of filing: 10.01.2008
(51) Int. Cl.: A47L 15/42, D06F 39/12, A47B 91/02, F16M 7/00

(54) **FIXING SYSTEM FOR HEIGHT-ADJUSTABLE FEET ON WASHING MACHINES AND SIMILAR APPLIANCES**
FIXIERSYSTEM FÜR HÖHENVERSTELLBARE FÜSSE AN WASCHMASCHINEN UND ÄHNLICHEN GERÄTEN
SYSTÈME DE FIXATION POUR PIEDS RÉGLABLES EN HAUTEUR SUR DES MACHINES À LAVER ET DES APPAREILS SIMILAIRES

(30) Priority: 28.02.2007 IT MC20070037
(43) Date of publication of application: 25.11.2009
(73) Proprietor: V.I.C. - Viterie Italia Centrale S.R.L., 60044 Fabriano (AN) (IT)
(72) Inventor: PETTINARI, Pierluigi, I-06022 Fossato di Vico (PG) (IT)
(74) Representative: Baldi, Claudio
(86) International application number: PCT/IT2008/000016
(87) International publication number: WO 2008/105013

(56) References cited:
- EP-A- 0 494 747
- EP-A- 1 530 925
- EP-A- 1 777 333
- DE-U1- 8 505 165
- GB-A- 1 543 304

## Description

The present patent application relates to a fixing system for height-adjustable feet on washing machines and similar appliances, and to the apparatus used to implement the system.

As it is known, the support and stabilisation of household appliances are normally entrusted to four height-adjustable feet, each of them being composed of a screw designed to engage from down upwards into the case of the household appliance so that the base flange can rest on the floor.

A rubber base, usually with circular shape, is moulded or inserted into the said flange.

The possibility to adjust the height of the feet allows to level the washing machine, especially in case of a non-perfectly planar floor.

The presence of the base at the lower end of each feet is designed to create friction against the surface of the floor in order to prevent the washing machine from moving uncontrollably on the floor due to the strong stress that is generated internally, especially during drum spinning.

The vibrations that are generated during spinning (as well as the stress generated when handling the washing machine) are often capable of causing the uncontrolled unscrewing of the height-adjusted feet, thus impairing the planarity of the household appliance.

For this reason, some devices have been conceived to expressly prevent this negative fact.

To that end, in some cases the mounting of the threaded stem of the feet is stabilised by means of a lock-nut; in other instances, an elastic friction element (possibly a helical spring inserted into the threaded stem) is mounted between the bottom wall of the household appliance, where the threaded stem of the feet is engaged, and the rubber base of the household appliance.

In case of feet provided with metric threading designed to be fixed onto the metal, threaded inserts (each of_them being composed of a sort of nut welded or clipped to the crosspiece) are inserted in a crosspiece of the bottom of the case to be supported in order to engage the feet.

As an additional alternative, the crosspieces on the bottom of the appliance case are provided with drawn holes designed to be engaged with screws.

In this consolidated technological situation, reference must be also made to the modes used to fix height-adjustable feet to appliance cases provided with crosspieces or similar sections obtained from plastic material on the bottom.

In these cases, self-tapping screws are used, being designed to engage in the internal screw thread generated by them with a friction coefficient higher than the "spontaneous unscrewing" torque generated by the aforementioned vibrations, by taking advantage of the combined effect of the geometry of the screws and the plasticity of the plastic material.

DE 85 05 165 discloses a fixing system for a height adjustable feet of a household appliance comprising an insert composed of a base with a centrally protruding hollow column provided with tongues on the walls that are capable of deformation by expansion.

Following to a critical evaluation of the prior technique, the present invention has been devised in order to pursue a two-fold objective, that is to say simplify and speed up the mounting operations of the height-adjustable foot on the bottom of the case of the washing machine and, at the same time, ensure stability and reliability, thus absolutely preventing any risk of "spontaneous unscrewing".

Therefor, the present invention provides a fixing system of height adjustable feet according to independent claim 1.

In particular, the mounting system of the invention is designed to be used on washing machine cases made of sheet metal; nevertheless, also in this situation, advantage is taken of the great stability resulting from engaging a self-tapping stem of a metal foot into the internal screw thread generated in a plastic object.

To that end, a special plastic insert has been inserted between the threaded stem of a traditional height-adjustable foot and the metal of a sheet metal case for household appliances.

The following observations are useful for understanding the invention as defined in the claims and its application. The insert may consist of a preferably truncated-conical base that is centrally provided with a hollow column with polygonal section.

The insert is exactly inserted from down upwards into a corresponding housing obtained by means of a deep drawing process on the bottom of the sheet metal of the case of a washing machine.

The shape and depth of the housing are such that it exactly receives the base of the plastic insert, while the central hole provided in the housing is exactly crossed by the central column of the insert.

It can be otherwise stated that the presence of the hole at the top of the drawn housing allows the column inserted into it to protrude internally into the sheet metal bottom of the washing machine.

Once the plastic insert has been inserted, the threaded stem of the height-adjustable foot is screwed inside the column from down upwards.

The engagement of the threaded stem in the internal walls of the column determines a double positive effect in terms of the stable coupling between each foot and the sheet metal case.

The first positive consequence of this operation is represented by the high "anti-screwing" friction exerted by the threaded stem on the internal screw thread generated by it in the internal walls of the plastic column.

The second advantageous effect refers to the fact that the engagement of the threaded stem of the foot causes the progressive outward divarication on opposite sides of two tongues especially obtained on the sides of the column of the plastic insert of the present invention.

Following to the said divarication, the two tongues create an insuperable obstruction above the drawn housing obtained on the sheet metal of the washing machine, thus preventing the column from being accidentally removed downwards, together with the insert.

It can be said that, following to the engagement of the threaded stem of the height-adjustable foot, the column of the plastic insert acts as an expandable plug used to stabilise the mounting of a screw into a hole drilled on a masonry wall.

For more clarity the description of the invention continues with reference to the enclosed drawing, which is intended for purposes of illustration only and not in a limiting sense, whereby:
- figure 1 is an exploded axonometric view of the components of the apparatus used to implement the fixing system of an embodiment useful in understanding the invention;
- figure 2 is a cross-sectional view with an axial plane of a height-adjustable foot screwed into the plastic insert positioned inside the housing obtained on the bottom of a sheet metal case;
- figure 3 is identical to figure 2, except for the fact that the sectional plane is staggered by 90°;
- figure 4 is a cross-sectional view with an axial plane of a first constructive embodiment of the apparatus shown in figure 1.
- figure 5 is an exploded axonometric view of an embodiment of the fixing system of the invention;
- figures 6 to 9 are cross-sectional views showing the operative sequence used to implement the fixing system of the invention using the embodiment shown in figure 5.
With reference to the enclosed figures, the fixing system provides for the ordered sequence of the following operative phases:
- realisation in a crosspiece of the bottom of the sheet metal case of a washing machine of a special drawn housing (1) with lower concavity provided on top with a central hole (1a); in the embodiment shown in the aforementioned figures, the housing (1) is provided with a basically truncated-conical profile, while the hole (1 a) is provided with a square cross-section with rounded corners;
- insertion into the housing (1), from down upwards, of a plastic moulded insert (A) composed of a truncated-conical base (2a) with a hollow protruding column (2b) with square cross-section and rounded comers; it being provided, in particular, that the truncated-conical base (2a) is exactly engaged into the corresponding drawn housing (1) and the central column (2b) crosses the central hole (1a) of the housing (1) protruding internally in the sheet metal case of the washing machine;
- forced screwing of the self-tapping stem (3) of a height-adjustable metal foot (B) in the longitudinal hole (20) internally provided on the hollow column (2b) of the insert (A), with consequent outward divarication on opposite sides of two tongues (2c) obtained by means of corresponding U-shaped notches (2d) provided on the walls of the column (2b).

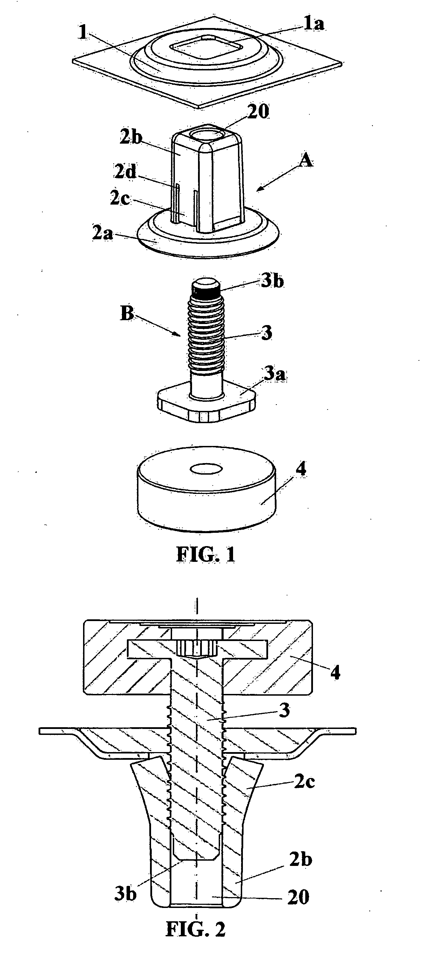

In particular, as shown in figure 2, the two tongues (2c) are positioned in the section of the column (2b) designed to be placed above the drawn housing (1) after coupling.

In such a way, once they have reached the divaricated position, the two tongues (2c) create an insuperable obstruction against the accidental downward removal of the entire insert (A) from the housing (1).

The reason for this is that the total width of the tongues (2c) is considerably higher than the cross-section of the hole (1a) in which the column (2b) is inserted.

Moreover, it must be noted that the square cross-section of the central hole (1a) of the drawn housing (1) guarantees that the column (2b) inserted inside the housing (1), together with the plastic insert (A) cannot idle inside the housing (1) when the threaded stem (3) of the foot (B) is screwed inside the column (2b).

In fact, this "anti-rotational" capability can be given to an alternative embodiment, in which a truncated-pyramidal profile is given to the drawn housing obtained on the bottom of the sheet metal case and a circular profile is given to the hole provided on top; in this case, the plastic insert (A) designed to be coupled with the drawn housing should be provided with a corresponding truncated-pyramidal base and a hollow column with circular cross-section.

Moreover, it must be noted that the foot (B) is normally provided in a small flange (3a) at the base of the threaded stem (3) with a traditional rubber base (4) designed to create the correct friction with the floor.

Another peculiarity of this embodiment must be noted also with reference to the possible realisation of the "foot (B) - insert (A)" assembly.

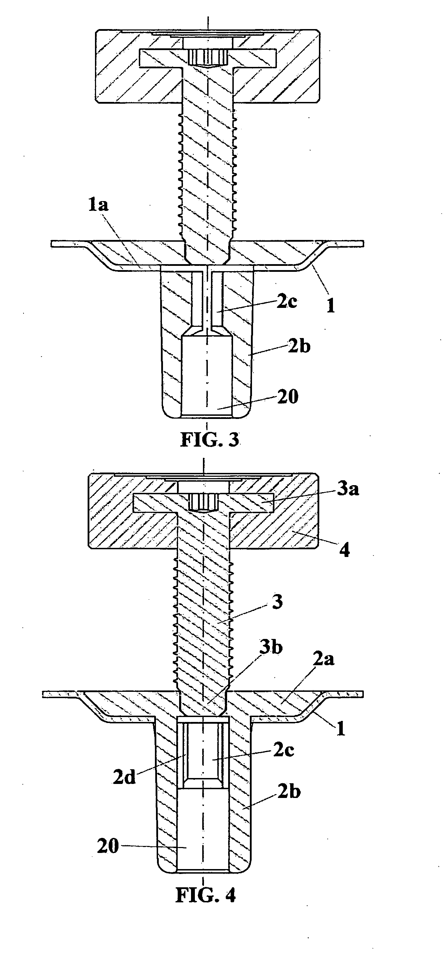

In fact, according to the embodiment illustrated in figure 3, the height-adjustable foot (B) and relevant plastic insert (I) are physically independent; it being provided that their stable coupling is only produced when they are positioned - as mentioned earlier - in the housing (1) obtained on the bottom of the sheet metal case of a washing machine.

Alternatively, the two components (A, B) can be "pre-assembled" by means of moulding.

In such an embodiment, the insert (A) is incorporated in the foot (B) in such a way that the smooth point (3b) of the threaded stem (3) is "welded" in the opening of the column (2b), as shown in figure 3.

Pre-assembly ensures the easier installation because, after inserting the insert (A) into the corresponding housing (1) on the case of a washing machine, the operator will find the self-tapping stem (3) of the foot (B) already engaged in perfect alignment with the internal cavity of the column (2b), and will be in a position to start screwing immediately without any centring problems.

In practical terms, pre-assembly is obtained by incorporating the point (3b) of the self-tapping screw (3) in the same moulding material used to obtain the insert (A) at the height of the opening of the column (2b).

In this way, the simple screwing of the stem (3) towards the inside of the column (2b) can overcome the adhesion between the point of the stem (3) and the opening hole of the column (2b).

As mentioned earlier, according to this pre-assembled embodiment of the foot (B) and relevant insert (A), the two components are moulded together by means of an especially designed mould..

In fact, such a mould must be designed in order to initially receive only the metal foot (A), and provided with two special impressions designed to cause the necessary incorporation of the ends of the foot in the plastic material in fluid state that is poured inside the mould.

The first impression usually originates the traditional rubber base (4) designed to incorporate the flange (3a) at the base of the stem (3) of the foot (B).

The second impression originates the insert (A) and guarantees the drowning of the end (3b) of the self-tapping stem (3) of the foot (B) inside the opening of the longitudinal hole (20) of the column (2b).

Finally, it must be noted that alternative solutions may be provided to realise the components of the aforementioned apparatus.

In such a case, the drawn housing (1) obtained on the bottom of the sheet metal case can be eliminated, providing that the base (2a) of the insert (A) touches against the lower side of the case.

Likewise, the divaricated tongues (2c) on the walls of the column (2b) of the insert (A) may be eliminated by alternatively providing areas of the said walls that expand under the action of the self-tapping stem (3) of the foot (B).

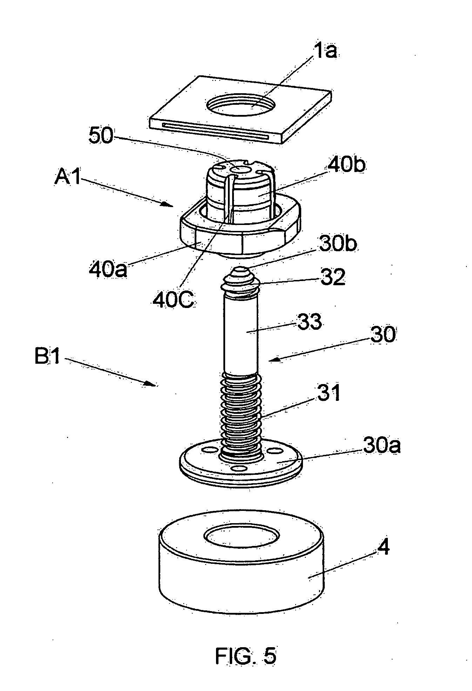

With reference to figures 5 to 9, an embodiment of the fixing system of height-adjustable feet according to an embodiment of the invention is described below.

As shown in figure 5, this alternative embodiment of the foot (B1) comprises a self-tapping stem (30) provided at the base end with a small flange (30a) contained inside a rubber base (4) designed to create the correct friction with the floor.

The peculiarity of the stem (30) consists in that it is provided with two threaded sections (31 and 32) separated by a unthreaded intermediate section (33).

The first threaded section (31) extends for approximately half of the length of the stem (30) starting from the base flange (30a), while the second threaded section (32) only affects a short section of the top end (30b) of the stem (30).

The plastic moulded insert (A1) consists in a base (40a) with a centrally protruding hollow column (40b), having the same circular cross-section as the central hole (1a) obtained on the bottom of the sheet metal case of the washing machine.

The column (40b) and the base (40a) are both crossed by the same longitudinal hole (50) that ends on top with a section (50a) with reduced diameter due to the thickening of the wall of the column (40b), which is externally provided with regularly spaced longitudinal notches (40c) designed to deform the ending section (50a) by divarication.

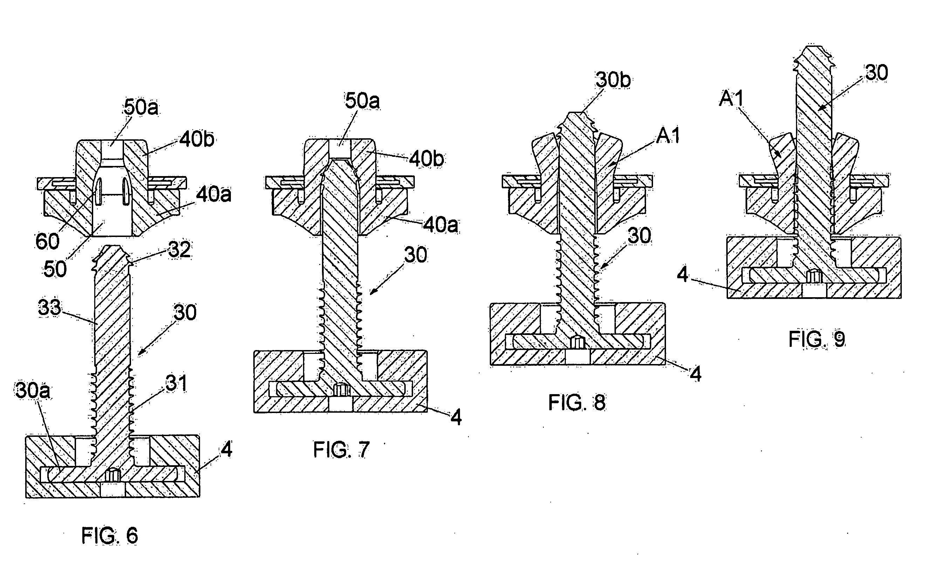

Figures 6 to 9 show the said deformation by divarication during the screwing of the stem (30) inside the hole (50) of the plastic insert (A1).

Figures 6 to 9 are cross-sectional views of the stem (30) and the column (40b) with a plane passing through their longitudinal axis.

As shown in figures 7 and 8, the deformation by divarication of the ending section (50a) is only generated by the second threaded section (32) that ends outside the hole (50) when the first threaded section (31) starts to bite the opening of the hole (50).

As shown in figure 9, while screwing the stem (30) in the hole (50) further, also the unthreaded intermediate section (33) comes out of the hole (50), while the first threaded section (31) is gradually screwed into the hole (50).

As shown in figures 8 and 9, while screwing the first threaded section (31), the unthreaded intermediate section (33) adheres and rubs against the internal walls of the ending section (50a) with reduced diameter.

The main advantage of this second alternative embodiment of the present invention is that it averts the risk that while adjusting the height of the foot (B) the operator may accidentally unscrew the stem (3) until it is completely removed from the plastic insert.

This accidental action cannot occur with the foot (B1) since the maximum adjustment travel of the stem (30) coincides with the height of the first threaded section (31).

Due to a significant resistance variation, the operator will immediately understand when the first threaded section (31) loses its grip with the base (40a) of the column (40b) during the unscrewing.

In any case, also in the latter case, the stem (30) will maintain a stable centred position inside the insert (A1) because of the action suffered by the unthreaded intermediate section (33) that is permanently subjected to the tightening pressure of the internal walls of the ending section (50a) with reduced diameter, as shown in figure 8.

In order to favour the initial self-tapping phase of the ending section (50a) by the second threaded section (32), longitudinal through slots (60) are provided in the connection section that precedes the ending section (50a), as shown in figure 6.

## Claims

1. Fixing system of height-adjustable feet comprising:
- a bottom (1) of a sheet metal case provided with holes (1 a);
- a moulded plastic insert (A1) consisting in a base (40a) with a centrally protruding hollow column (40b) designed to be inserted, without rotation, into said hole (1a) of the bottom (1) and protrude from it, said column (40b) comprising a longitudinal hole (50) and one or more areas on the walls that are capable of deformation by expansion;
- a metal foot (B1) composed of a small flange (30a) provided with a rubber base (4), with a protruding stem (30) that is engaged inside the longitudinal hole (50) of the column (40b) of the insert (A1), thus determining an outward expansion of the walls of the column (40b),
**characterised in that**
said stem (30) of the foot (B1) is a self-tapping stem (30), and
said longitudinal hole (50) of the column (40b) of the insert (A1) ends on top with an ending section (50a) with reduced diameter due to the thickening of the wall of the column (40b), so as to obtain a deformation by divarication of the ending section (50a) during the screwing of the stem (30) inside the hole (50) of the plastic insert (A1).

2. Fixing system according to claim 1, **characterised in that** said column (40b) is externally provided with regularly spaced longitudinal notches (40c) designed to deform said ending section (50a) by divarication.

3. Fixing system according to claim 1 or 2, **characterised in that** said self-tapping stem (30) has two threaded sections (31 and 32) separated by a unthreaded intermediate section (33).

4. Fixing system according to claim 3, **characterised in that** said first threaded section (31) extends for half of the length of the stem (30) starting from the base flange (30a).

5. Fixing system according to anyone of the preceding claims, **characterised in that** longitudinal through slots (60) are provided in a connection section that precedes the ending section (50a) of said longitudinal hole (50) of the foot.

## Patentansprüche

1. System für die Montage eines höhenverstellbaren Füßchens umfassend:
- einen Boden (1) eines Blechgehäuses, der mit einem Loch (1a) versehen ist;
- einen spritzgegossenen Kunststoffeinsatz (A1), bestehend aus einem Sockel (40a) und einer daraus hervorstehenden, zentralen Hohlsäule (40b), die dazu bestimmt ist, ohne Drehung in das Loch (1a) auf dem Boden (1) eingesteckt zu werden und daraus hervorzustehen, wobei die Säule (40b) ein Langloch (50) sowie eine oder mehrere Bereiche auf den Wänden umfasst, die in der Lage sind, sich durch Ausdehnung zu verformen;
- ein Metallfüßchen (B1) bestehend aus einem kleinen Flansch (30a), der mit einem Gummisockel (4) mit überstehendem Schaft (30) versehen ist, der in das Langloch (50) der Säule (40b) des Einsatzes (A1) eingreift und auf diese Weise eine Ausdehnung der Wände der Säule (40b) nach außen bewirkt, **dadurch gekennzeichnet, dass**
es sich bei dem Schaft (30) des Füßchens (B1) um einen selbstschneidenden Schaft handelt (30), und
das Lochloch (50) der Säule (40b) des Einsatzes (A1) an der oberen Seite aufgrund der Verdickung der Wand der Säule (40b) in einem Endabschnitt (50a) mit geringerem Durchmesser endet, so dass eine Verformung durch Spreizung des Endabschnitts (50a) während des Einschraubens des Schafts (30) in das Loch (50) des Kunststoffeinsatzes (A1) bewirkt wird.

2. System gemäß Anspruch 1, **dadurch gekennzeichnet, dass** die Säule (40b) außenseitig mit Längseinschnitten (40c) in regelmäßigen Abständen versehen ist, die dazu bestimmt sind, den Endabschnitt (50a) durch Spreizung zu verformen.

3. System gemäß Anspruch 1 oder 2, **dadurch gekennzeichnet, dass** der selbstschneidende Schaft (30) zwei Gewindeabschnitte (31 und 32) besitzt, die durch einen gewindefreien Zwischenabschnitt (33) voneinander getrennt sind.

4. System gemäß Anspruch 3, **dadurch gekennzeichnet, dass** der erste Gewindeabschnitt (31) ausgehend vom Sockelflansch (30a) sich über die halbe Länge des Schafts (30) erstreckt.

5. System gemäß einem beliebigen der vorstehenden Ansprüche, **dadurch gekennzeichnet, dass** die durchgehenden Längsschlitze (60) in einem Verbindungsabschnitt vorgesehen sind, der dem Endabschnitt (50a) des Langloches (50) des Füßchens vorgelagert ist.

## Revendications

1. Système pour le montage d'un pied réglable en hauteur, comprenant :
- un fond (1) d'une carcasse en tôle muni d'un trou (1a) ;
- un insert imprimé en matériel plastique (A1) formé par une petite base (40a) et par une surjacente petite colonne centrale creuse (40b) apte à s'enfiler, sans rotation, dans le dit trou (1a) du fond (1) et en déborder, la dite colonne (40b) comprenant un trou longitudinal (50) et, sur les parois, une ou plusieurs zones aptes à se déformer par expansion ;
- un pied métallique (B1) constitué d'une petite bride (30a) munie d'une base en caoutchouc (4), avec une tige débordante (30) qui s'engage dans le trou longitudinal (50) de la colonne (40b) de l'insert (A1), en déterminant ainsi une expansion vers l'externe des parois de la colonne (40b),
**caractérisé en ce que**
la dite tige (30) du pied (B1) est une tige autotaraudeuse (30), et
le dit trou longitudinal (50) de la colonne (40b) de l'insert (A1) termine sur la partie supérieure avec une section terminale (50a) de diamètre réduit à cause de l'épaississement des parois de la colonne (40b), de manière à obtenir une déformation par écartement de la section terminale (50a) lors du vissage de la tige (30) dans le trou (50) de l'insert en plastique (A1).

2. Système selon la revendication 1, **caractérisé en ce que** la dite colonne (40b) est dotée à l'externe d'entailles longitudinales (40c) régulièrement espacées, destinées à déformer la dite section terminale (50a) par écartement.

3. Système selon la revendication 1 ou 2, **caractérisé en ce que** la dite tige autotaraudeuse (30) présente deux portions filetées (31 et 32) séparées par un segment intermède non fileté (33).

4. Système selon la revendication 3, **caractérisé en ce que** la dite première section filetée (31) s'étend jusqu'à la moitié de la longueur de la tige (30) en partant de la bride de base (30a).

5. Système selon l'une quelconque des revendications précédentes, **caractérisé en ce que** des fissures passantes longitudinales (60) sont prévues au niveau d'une section de liaison qui précède la section terminale (50a) du dit trou longitudinal (50) du pied.
